# EUROPÄISCHE PATENTSCHRIFT

(11) **EP 1 398 289 B1**
(45) Veröffentlichungstag und Bekanntmachung des Hinweises auf die Patenterteilung: **11.06.2008**
(21) Anmeldenummer: 02405801.8
(22) Anmeldetag: 13.09.2002
(51) Int. Cl.: B65H 33/16, B65G 47/51, B42C 19/00, F26B 15/14

(54) **Förderanordnung zur Verarbeitung von Druckprodukten**
Transport system for processing printed products
Système de transport pour le traitement de produits imprimés

(43) Veröffentlichungstag der Anmeldung: 17.03.2004
(73) Patentinhaber: Müller Martini Holding AG, 6052 Hergiswil (CH)
(72) Erfinder: Langenegger, Daniel, 4805 Brittnau (CH); Schneeberger, Hansjörg, 4805 Brittnau (CH)

(56) Entgegenhaltungen:
- EP-A- 0 888 994
- EP-A- 0 957 055
- DE-A- 3 829 355
- FR-A- 1 591 532
- GB-A- 1 530 981
- US-A- 3 911 593

## Beschreibung

Die Erfindung betrifft eine Förderanordnung zur Verarbeitung von Druckprodukten, mit einem Einlauf, an dem die Druckprodukte einer Förderstrecke zugeführt werden, mit einer Mehrzahl von Ablagen, auf denen die Druckprodukte entlang der Förderstrecke transportiert werden und mit einer Auslage, an der die Druckprodukte am Ende der Förderstrecke weggeführt werden, wobei die Förderstrecke einen an den Einlauf anschliessenden, aufsteigenden Förderstreckenbereich und einen diesen mit einem parallelen, wenigstens an die Auslage reichenden, absteigenden Förderstreckenbereieh verbindenden horizontalen Förderstreckenbereich aufweist.

Bei der Verarbeitung von Druckprodukten durchlaufen diese in der Regel mehrere Bearbeitungsstationen und können hierbei mit Förderanordnungen der genannten Art von der einen zur anderen Bearbeitungsstation transportiert werden. Die Druckprodukte können beispielsweise klebegebundene oder fadengebundene Buchblöcke, lose Buchstapel, lose Bogen oder Broschuren sein. Bei den Bearbeitungsstationen werden die Druckprodukte beispielsweise geheftet, beleimt oder geschnitten. Im Stand der Technik sind beispielsweise Förderanordnungen bekannt, welche am Rücken beleimte Buchblöcke einer Schneidemaschine zuführen. Hierbei werden lose Bogenstapel durch flüssigen Klebstoff zu einem Magazin oder Buch gebunden. Bevor das klebegebundene Magazin oder Buch einem weiteren Verarbeitungsschritt, insbesondere einem Seitenschnitt zugeführt werden kann, muss der warme Klebstoff weitgehend abgekühlt oder getrocknet und ausgehärtet werden. Der Klebstoff soll hierbei eine sogenannte Beschnittfestigkeit erhalten. Um die dafür notwendige Kühlzeit bzw. Trocknungszeit zu erreichen, werden bei bekannten Klebebindeanlagen die Druckprodukte nach dem Binden auf Transportbändern über eine gewisse horizontale Strecke transportiert. Diese Strecke ist die Kühlstrecke, auf welcher der Klebstoff bis zur Erreichung der genannten Beschnittfestigkeit ausgehärtet bzw. gekühlt wird, wobei das Kühlen beispielsweise bei Raumtemperatur erfolgen kann.

Horizontale Kühlstrecken können viele Meter lang sein und beanspruchen entsprechend viel Platz. Sie sind oft sehr lang, um die notwendige Verweilzeit zu garantieren. Kühlstrecken werden deshalb auch als Türme gebaut, die einen wesentlich kleineren Platzbedarf als horizontale Kühlstrecken aufweisen. Kühltürme sind in den folgenden beiden Ausführungen bekannt:

Bei der einen Ausführung wird die Kühlstrecke durch einen Transportteppich gebildet, auf dem die Druckprodukte in einem ersten Turm entlang einer spiralförmigen Bahn in die Höhe transportiert und anschliessend in einem zweiten benachbarten Turm wiederum entlang einer spiralförmigen Bahn heruntergeführt werden. Dies ist eine vergleichsweise platzsparende Ausführung, sie hat jedoch den Nachteil, dass der Maschinentakt verloren geht. Für die Weiterverarbeitung der Druckprodukte ist der Verlust des Maschinentaktes nachteilig.

Bei der anderen Ausführung wird ein Lagenlift nach dem sogenannten Paternoster-Prinzip verwendet. Bei diesem Lagenlift ist entlang einer Fördervorrichtung eine bestimmte Anzahl von Ablagen angeordnet. Auf jede Ablage wird wenigstens ein Druckprodukt aufgelegt. Jedes Druckprodukt wird auf einer Ablage entlang der Fördervorrichtung in die Höhe und anschliessend auf einer gegenläufigen Bahn wieder heruntertransportiert. Der Maschinentakt wird hierbei beibehalten. Nachteilig ist bei dieser Ausführung, dass bei einem schnelllaufenden Klebebinder ein sehr hoher Turm von einigen Metern Höhe erforderlich ist, um die Kühlzeit zu erhalten. Zudem überschlägt sich am oberen Wendepunkt die Ablage, sodass sich die Orientierung des Druckproduktes ändert, was in vielen Fällen unerwünscht ist.

Die vorveröffentlichte EP 0 957 055 A2 vermittelt eine Abstapelvorrichtung zum Stapeln von Gegenständen zu Warenstapeln, mit einer Warenzuführung, einer Konfektioniereinheit und einer Bereitstelluagseinheit für eine Verpackung der Warenstapel. Die Konfektioniereinheit weist ein Warenmagazin mit einer oder mehreren Warenauflagen auf, auf denen die in das Warenmagazin eingeführten Gegenstände zu Warenstapeln abgelegt werden.

Die GB - A - 1 530 981 betrifft ein Verfahren und eine Vorrichtung zum Transport einer Anzahl von zu stapelnden Gegenständen, beispielsweise Zeitschriften oder Magazine, die nach dem Stapeln verpackt werden. Die Gegenstände werden auf einem ansteigenden Förderabschnitt jeweils einem Abteil eines Fördezern übergeben, von diesem auf einem absteigenden Förderabschnitt durch eine auf mehrere Abteile einwirkende Ausstosservorrichtung in Form eines Stapels entnommen.

Der Erfindung liegt die Aufgabe zugrunde, eine Förderanordnung der genannten Art zu schaffen, die die genannten Nachteile vermeidet. Die Förderanordnung soll bei kleinem Platzbedarf so ausgebildet sein, dass der Maschinentakt nicht verloren geht.

Die Aufgabe ist bei einer gattungsgemässen Förderanordnung dadurch gelöst, dass die Abstände der Ablagen im Einlaufbereich der Druckprodukte jeweils an die Dicke des Druckproduktes anpassbar gesteuert sind. Die erfindungsgemässe Förderanordnung ist nicht auf die Verwendung als Kühlstrecke beschränkt. Sie kann grundsätzlich als Förderstrecke für Druckprodukte in einem Herstellungs- oder Verarbeitungsprozess verwendet werden. Beispielsweise kann die Förderanordnung auch als Puffer für Druckprodukte vorgesehen sein.

Bei einer erfindungsgemässen Förderanordnung ist die Teilung der Ablagen an die jeweilige Dicke des Druckproduktes anpassbar und somit variabel. Die Förderanordnung kann exakt auf die maximale Druckleistung ausgelegt werden. Sie hat hierbei nie eine Über- oder Unterkapazität. Dies auch dann, wenn die Druckprodukte unterschiedlich dick oder unterschiedliche Formate aufweisen. Die Dicke und die unterschiedlichen Formate können hierbei auch in einer Reihe beliebig ändern. Dies ist besonders vorteilhaft bei einem sogenannten "finishing on demand", bei dem bei konstanter Druckleistung einer Digitaldruckmaschine nacheinander unterschiedliche Druckprodukte hergestellt werden. Mit der erfindungsgemässen Förderanordnung kann bei konstanter Druckleistung und konstanter Förderstrecke eine konstante Förderzeit, beispielsweise Kühlzeit erreicht werden, wobei das Format und die eines Produktes variabel sein kann. Unterschiedlich dicke Druckprodukte werden somit im Fall einer Kühlstrecke bei gleicher optimaler Kühlzeit ausgehärtet.

Nach einer Weiterbildung der Erfindung ist vorgesehen, dass die Teilungen jeweils durch eine von unten in die Förderstrecke eingeführte Ablage eingestellt wird. Dies ermöglicht eine besonders kostengünstige und funktionssichere Ausführung. Die Ablagen werden gemäss einer Weiterbildung der Erfindung jeweils einem Ablagenmagazin entnommen. Dies erfolgt konstruktiv besonders vorteilhaft mit einer Schiebevorrichtung, mit welcher die Ablagen aus dem Ablagenmagazin für den Transport in die Förderstrecke bereitgestellt werden. Die bereitgestellten Ablagen werden gemäss einer Weiterbildung der Erfindung mit einer Aufzugvorrichtung in die Förderstrecke transportiert. Hierbei wird die gewünschte Teilung eingestellt.

Die erfindungsgemässe Förderanordnung ist gemäss Weiterbildung der Erfindung eine Kühlstrecke oder ein Puffer. Es sind hier aber auch noch andere Anwendungen denkbar.

Weitere vorteilhafte Merkmale ergeben sich aus den abhängigen Patentansprüchen, der nachfolgenden Beschreibung sowie der Zeichnung.

Ausführungsbeispiele der Erfindung werden nachfolgend anhand der Zeichnung näher erläutert. Es zeigen:
- Fig. 1: schematisch eine Ansicht einer erfindungsgemässen Förderanordnung,
- Fig. 2: eine Teilansicht der Förderanordnung in Richtung des Pfeils II der Figur 1,
- Fig. 3: ein Schnitt durch die erfindungsgemässe Förderanordnung entlang der Linie III-III der Figur 1,
- Fig. 4: schematisch eine Ansicht einer erfindungsgemässen Förderanordnung gemäss einer Variante,
- Fig. 5: schematisch eine Ansicht einer erfindungsgemässen Förderanordnung gemäss einer weiteren Variante und
- Fig. 6: schematisch eine Ansicht einer erfindungsgemässen Förderanordnung gemäss einer dritten Variante.

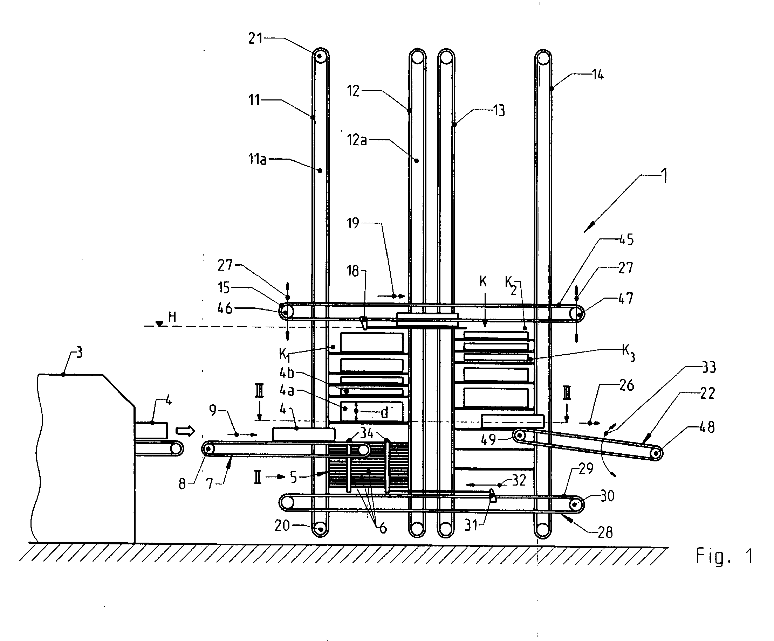

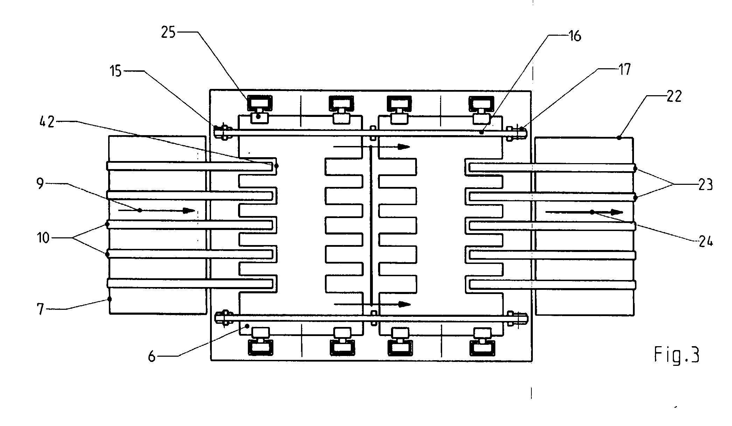

Die in Figur 1 gezeigte Förderanordnung 1 besitzt einen Eilauf 7, der gemäss Figur 3 mehrere Transportbänder 10 besitzt, die von einer gemeinsamen Antriebsrolle 8 so angetrieben sind, dass Druckprodukte 4 in Richtung des Pfeiles 9 einer Förderstrecke K zugeführt werden. Die Druckprodukte 4 sind beispielsweise klebegebundene Bücher und Magazine, die von einem an sich bekannten Klebebinder 3 übernommen werden. Bogenstapel für die Druckprodukte 4 werden beispielsweise in einer Digitaldruckmaschine im sogenannten "on demand"-Verfahren gedruckt. Die Digitaldruckmaschinen können somit insbesondere in ihrer Dicke sehr unterschiedlich sein. In der Figur 1 sind hier schematisch dicke Druckprodukte 4a und dünne Druckprodukte 4b angedeutet. Die Reihenfolge kann an sich beliebig sein. Selbstverständlich können für einen Druckauftrag auch eine grosse Serie von lediglich dicken Druckprodukten 4a oder lediglich dünnen Druckprodukten 4b verarbeitet werden. Es können auch Kleinserien von dicken Druckprodukten 4a und kleinen Druckprodukten 4b aufeinander folgen. Die Druckleistung der Digitaldruckmaschine ist hierbei konstant. Die Frequenz, mit der die dünnen Druckprodukte 4b anfallen, ist somit wesentlich höher als diejenige, mit welcher die dicken Druckprodukte 4a anfallen. Die Druckprodukte 4 können jedoch auch lose Bogenstapel, fadengeheftete Stapel oder Broschüren sein.

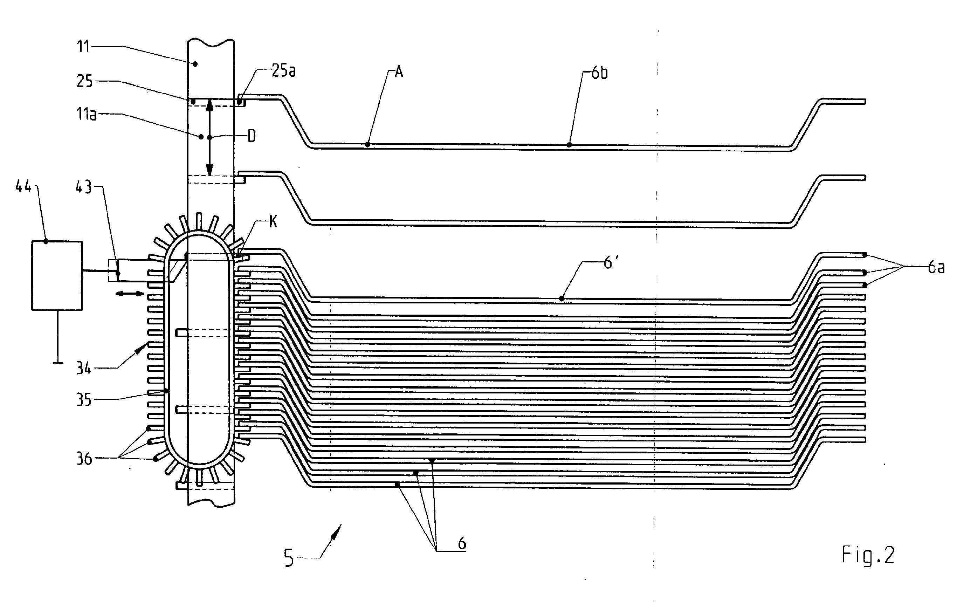

Mit dem Einlauf 7 werden die Druckprodukte 4 jeweils einzeln auf eine Ablage 6 aufgeschoben. Diese Ablagen 6 sind gemäss der Figur 2 plattenförmig ausgebildet und weisen seitlich nach oben versetzte und horizontal nach aussen gerichtete Ränder 6a auf. Eine obere Auflagefläche 6b ist gemäss Figur 2 horizontal ausgerichtet. Die Ablagen 6 weisen zudem gemäss Figur 3 Ausnehmungen 42 auf, in welche jeweils ein Transportband 10 eingreift.

Die Ablagen 6 sind vor der Aufnahme von Druckprodukten 4 in einem Stapel 5 gelagert, der gemäss Figur 1 unterhalb eines vertikalen Streckenabschnittes K1 im Bereich des Einlaufes 7 angeordnet ist. Der Stapel 5 besitzt gemäss Figur 2 zwei im Abstand und seitlich angeordnete Hebevorrichtung 34, die im Wesentlichen durch ein endloses Transportband 35 und einen hier nicht gezeigten Antrieb gebildet sind. Am endlosen Band sind aussenseitig in regelmässigen Abständen vorstehende Nocken 36 befestigt. Mit der Hebevorrichtung 34 werden die Ablagen 6 jeweils an einem Rand 6a gefasst. Mit der Hebevorrichtung 34 kann der gesamte Stapel 5 nach oben bewegt und gemäss Figur 2 eine oberste Ablage 6' etwas angehoben und für den Weitertransport bereitgestellt werden.

Der Weitertransport der angehobenen Ablagen 6' erfolgt mit zwei Aufzugmitteln 11 und 12, die jeweils ein endloses Band 11a bzw. 12a besitzen, die um Rollen 21 und 22 gelegt sind. Die Bänder 11a und 12a besitzen jeweils in regelmässigen Abständen horizontal ausgerichtete Tragelemente 25, die mit einem hier nicht gezeigten Stellmittel 43, beispielsweise einem pneumatischen Zylinder, horizontal verschiebbar sind. Die Verschiebung ist von einer Steuerung 44 gesteuert. Die Tragelemente 25 besitzen jeweils ein inneres Ende 25a, das in der in Figur 2 oben gezeigten Stellung eine Ablage 6 am Rand 6a untergreift. In der anderen in Figur 2 unten gezeigten Ruhestellung befindet sich das Ende 25a in einer rückgezogenen Stellung. Der in Figur 2 gezeigte Abstand D bildet eine Teilung zwischen zwei benachbarten Tragelementen 25 und ist ein minimaler Abstand. Wird jedes Tragelement 25 mit dem erwähnten Stellmittel 43 in die aktive Stellung verschoben, so besteht zwischen allen angehobenen und in die Strecke K geführten Ablagen 6 eine Teilung gemäss dem Abstand D. Wird jedes zweite Tragelement 25 aktiviert, so beträgt die Teilung zwischen zwei benachbarten Ablagen 6 2D. Möglich sind somit alle Vielfachen von D. Der Abstand zwischen zwei benachbarten in die Strecke K eingeführten Ablagen 6 kann somit mit der Steuerung 44 über das Stellmittel 43 eingestellt werden. Der Abstand beträgt somit D, 2D, 3D usw. Die Steuerung 44 ist mit dem Klebebinder 3 verbunden und stellt die Tragelemente 25 jeweils so, dass der Abstand zwischen zwei Ablagen 6 am Einlauf 7 zueinander einen Abstand haben, der an die Dicke d des aufzunehmenden Druckproduktes 4 angepasst ist. Bei einem dünnen Druckprodukt 4b beträgt der Abstand D und bei einem dicken Druckprodukte 4a beispielsweise 3D oder 4D. Die Teilungen bzw. Abstände sind somit Mehrfache von D. Grundsätzlich ist hier aber auch eine Ausführung denkbar, bei welcher die Abstände zwischen benachbarten Ablagen 6 bzw. die Teilungen stufenlos einstellbar sind.

Im vertikalen Streckenbereich K1, der beispielsweise ein Kühlstreckenbereich ist, werden die Druckprodukte 4 jeweils auf einer Ablage 6 vertikal nach oben transportiert. Die Transportgeschwindigkeit ist vorzugsweise konstant. Ist die in Figur 1 mit gestrichelter Linie eingezeichnete Förderhöhe H erreicht, so werden die Druckprodukte 4 jeweils mit einer Schiebevorrichtung 15 horizontal vom aufsteigenden Streckenbereich K1 in einen absteigenden Streckenbereich K3 transportiert. Bei einer solchen Verschiebung befinden sich die Druckprodukte 4 jeweils in einem horizontalen Streckenbereich K2. Auch in diesem Bereich K2 ist die Transportgeschwindigkeit vorzugsweise konstant. Die Verschiebung erfolgt mit einem endlosen Band 45, das um eine Antriebsrolle 46 sowie um eine Umlenkrolle 47 gelegt ist und wenigstens einen Mitnehmer 18 besitzt. Der Transport der Druckprodukte 4 im horizontalen Streckenbereich K2 ist in Figur 1 mit dem Pfeil 19 angedeutet. Die Schiebevorrichtung 15 ist gemäss Figur 1 in den Richtungen des Doppelpfeils 27 höhenverstellbar. Die Streckenbereiche K1 und K3 und damit die gesamte Strecke K können somit verlängert oder verkürzt werden. Zudem kann die Anzahl der laufenden Ablagen 6 vergrössert und verkleinert und damit die Anzahl der sich an der Anlage befindlichen Druckprodukte 4 verändert werden.

Im absteigenden Streckenbereich K3 werden die Ablagen 6 mit den Druckprodukten 4 mit Absenkmitteln 13 und 14 vertikal nach unten transportiert. Die Absenkmittel 13 und 14 können ähnlich wie die Aufzugmittel 11 und 12 ausgebildet sein. Die Ablagen 6 werden vorzugsweise ebenfalls von Tragelementen 25 gehalten. Diese erfassen jeweils eine Ablage 6, sobald diese von der Schiebevorrichtung 15 vollständig in den absteigenden Streckenbereich K3 geschoben sind. Die Teilungen des aufsteigenden Streckenbereichs K1 wird hierbei beibehalten. Die Teilungen sind somit auch im absteigenden Streckenbereich K3 an die Dicke der Druckprodukte 4 angepasst.

Im absteigenden Streckenbereich K3 werden die Druckprodukte 4 nach unten transportiert, bis diese einen Auslauf 22 erreichen, der gemäss Figur 3 ähnlich wie der Einlauf 7 durch eine Mehrzahl von Transportbändern 23 gebildet ist. Diese sind in den Richtungen des Doppelpfeils 33 um eine Antriebsrolle 48 gemeinsam verschwenkbar. Dadurch ist die Höhe einer Umlenkrolle 49 in der Höhe verstellbar. Die Druckprodukte 4 werden vom Auslauf 22 nacheinander aufgenommen und in Richtung des Pfeiles 26 aus der Strecke K herausgeführt und zu einer hier nicht gezeigten weiteren Verarbeitungsvorrichtung, insbesondere einer Schneidmaschine zugeführt. Nach dem Verlassen der Strecke K ist der Leim der Druckprodukte 4 ausgehärtet und hat beispielsweise die gewünschte Beschnittfestigkeit erreicht. Der Maschinentakt bleibt im Bereich der Förderanordnung 1 erhalten. Die Weiterverarbeitung der Druckprodukte insbesondere in einer Schneidmaschine kann somit im Maschinentakt des Klebebinders 3 erfolgen. Das Kühlen oder Trocknen des Leims erfolgt vorzugsweise an der Umgebungsatmosphäre.

Nach dem Auslauf 22 sind die Ablagen 6 leer und werden von den Absenkmitteln 13 und 14 nach unten zu einer horizontalen Schiebevorrichtung 28 transportiert. Diese Schiebevorrichtung 28 ist ähnlich wie die Schiebevorrichtung 15 ausgebildet und weist wenigstens ein endloses Band 29 auf, das wenigstens einen Mitnehmer 31 besitzt, mit dem die Ablagen 6 jeweils in Richtung des Pfeiles 32 nach links zum Stapel 5 verschoben werden. Sind die Ablagen 6 im Bereich des Stapels 5, so werden sie jeweils von der Hebevorrichtung 34 erfasst und von unten in den Stapel 5 eingeordnet. Bei der Betätigung der Hebevorrichtung 34 wandern diese Ablagen 6 jeweils von unten nach oben bis sie wieder von den Aufzugmitteln 11 und 12 erfasst und wie oben erläutert von unten in den aufsteigenden Streckenbereich K1 eingeführt werden. Hierbei wird die Teilung wie ebenfalls oben erläutert an die Dicke d der Druckprodukte 4 angepasst. Der genannte Zyklus kann damit wieder beginnen.

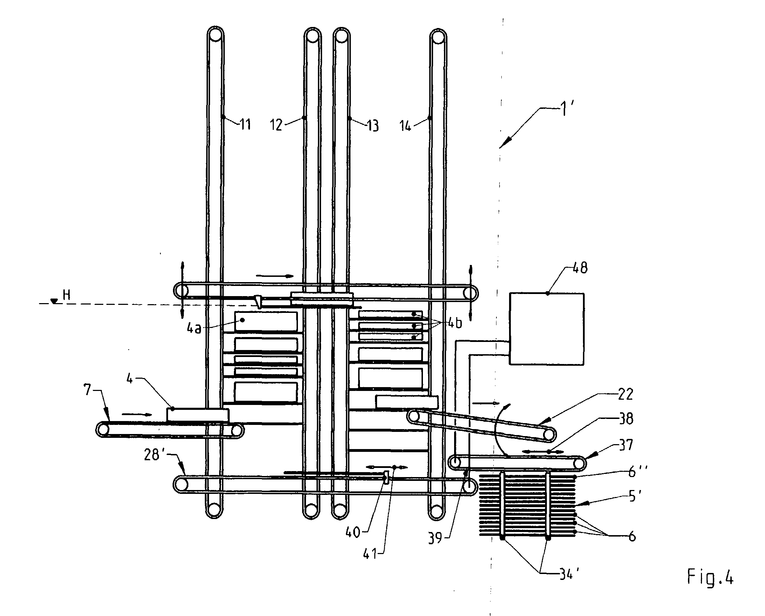

Die Figur 4 zeigt eine Förderanordnung 1', die sich von der oberen erläuterten Förderanordnung 1 bezüglich der Stapelbildung unterscheidet. Die Förderanordnung 1' ist beispielsweise ein Kühlturm oder ein Puffer und weist einen Stapel 5' auf, der sich unterhalb des Auslaufs 22 befindet. Über dem Stapel 5' ist ein Zugmittel 37 angeordnet, das wenigstens einen Mitnehmernocken 39 besitzt, mit dem jeweils eine oberste Ablage 6" des Stapels 5' in den Bereich einer Schiebevorrichtung 28' horizontal verschiebbar ist. Das Zugmittel 37 ist in seiner Förderrichtung umstellbar, sodass mit dem Mitnehmer 39 eine Ablage von der Schiebevorrichtung 28' übernommen und dem Stapel 5' zuführbar ist. Die beiden Förderrichtungen sind mit dem Doppelpfeil 38 angedeutet. Entsprechend ist auch die Schiebevorrichtung 28' umstellbar. Die beiden Förderrichtungen sind mit dem Doppelpfeil 41 angedeutet. Die leeren Ablagen 6 werden mit den Absenkmitteln 13 und 14 auf die Schiebevorrichtung 28' abgelegt. Die Ablagen 6 können nun wahlweise den Aufzugmitteln 11 und 12 oder dem Stapel 5' zugeführt werden. Werden die Ablagen 6 den Aufzugmitteln 11 und 12 zugeführt, so bleibt die Teilung erhalten. Wird eine Ablage 6 dem Stapel 5' zugeführt, so wird die Teilung verdoppelt. Im anderen Fall wird die Teilung halbiert. Befinden sich benachbarten Ablagen 6 im minimalen Abstand D, so kann keine weitere Ablage 6 dazwischen geschoben werden. Die Zugmittel 37 sowie die Schiebevorrichtung 28' sind mit einer Steuervorrichtung 48 gesteuert. Die Steuerung 48 berechnet jeweils die erforderliche Teilung und verschiebt die Ablagen 6 wie erläutert jeweils nach links in die Kühlstrecke oder nach rechts zum Stapel 5'. Im Stapel 5' werden die Ablagen 6 mit der Hebevorrichtung 34' transportiert, wie dies anhand der Hebevorrichtung 34 oben erläutert ist. Die Anzahl der Ablagen 6 des Stapels 5' kann somit ändern. Wird eine Serie von dünnen Druckprodukten 4b gekühlt, so ist der Stapel 5' entsprechend mit wenigen Ablagen 6 bestückt. Dem Stapel 5' können auch von Hand Ablagen 6 zugeführt oder entnommen werden. Die Anpassung der Teilungen an die Dicke der Druckprodukte 4 erfolgt somit auch bei der Förderanordnung 1' selbsttätig.

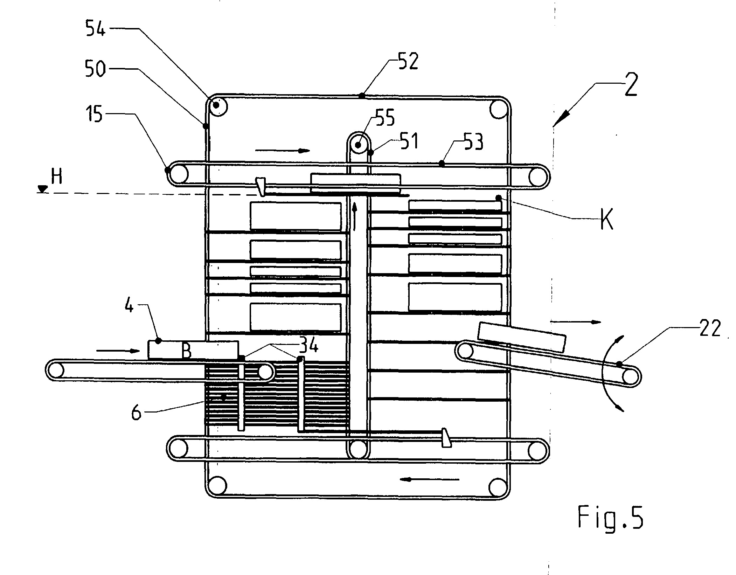

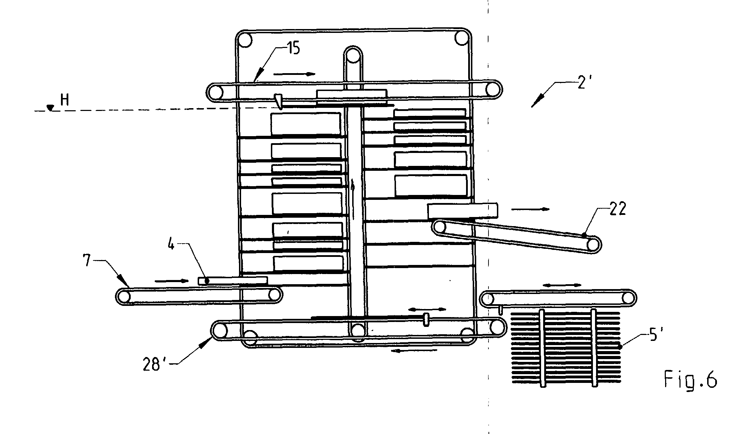

Die Figur 5 zeigt eine Förderanordnung 2, die bevorzugt ein Kühlturm ist und die sich von der Förderanordnung 1 im Wesentlichen durch den Transport der Druckprodukte 4 im Bereich der Strecke K unterscheidet. Für diesen Transport sind ein äusseres endloses Zugmittel 50 und ein inneres Zugmittel 51 vorgesehen. Beide Zugmittel 50 und 51 weisen jeweils eine Mehrzahl von endlosen Bändern 52 und 53 auf, die wie ersichtlich um vier Rollen 54 bzw. zwei Rollen 55 gelegt sind. Die Bänder 52 und 53 weisen ebenfalls hier nicht gezeigt Tragelement 25 auf, die wie oben erläutert gesteuert sind. Im übrigen arbeitet die Förderanordnung 2 wie die Förderanordnung 1. Möglich ist hier auch eine Ausführung mit einem Stapel 5', der seitlich und unterhalb eines Auslaufs 22 angeordnet ist, wie dies bei der Förderanordnung 1' gemäss Fig. 4 der Fall ist. Die Ausführungen gemäss den Figuren 5 und 6 zeichnen sich durch konstruktiv besonders einfache und dennoch funktionssichere Mittel für den Transport der Druckprodukte 4 aus und eignen sich besonders als Kühlstrecke oder als Trocknungsstrecke, auf welcher beispielsweise ein Dispersionsleim getrocknet wird. Die Ausführungen gemäss den Figuren 1 bis 4 eignen sich aufgrund der verstellbaren Förderstrecke besonders als Puffer, sie können jedoch beispielsweise auch als Kühlstrecken oder Trocknungsstrecken verwendet werden. Als Puffer kann die Förderanordnung auch fertige Druckerzeugnisse beispielsweise Bücher oder geheftete Zeitschriften an einem Ende einer Anlage aufnehmen und beispielsweise zum Versand wieder abgeben.

## Patentansprüche

1. Förderanordnung zur Verarbeitung von Druckprodukten, mit einem Einlauf (7), an dem die Druckprodukte (4) einer Förderstrecke (K) zugeführt werden, mit einer Mehrzahl von Ablagen (6), auf denen die Druckprodukte (4) entlang der Förderstrecke (K) transportiert werden und mit einer Auslage (22), an der die Druckprodukte (4) am Ende der Förderstrecke (K) von den Ablagen (6) weggeführt werden, wobei die Förderstrecke (K) einen an den Einlauf (7) anschliessenden, aufsteigenden Förderstreckenbereich (K1) und eignen diesen mit einem parallellen, wenigstens an die Auslage (22) reichenden, absteigenden Förderstreckenbareich (K3) verbindenden horizontalen Förderstreckenbareich (K2) aufweist, **dadurch gekennzeichnet, dass** die Abstände (D) der Ablagen (6) im Einlaufbereich der Druckprodukte (4) jeweils an die Dicke (d) des Druckproduktes (4) anpassbar gesteuert sind.

2. Förderanordnung nach Anspruch 1, **dadurch gekennzeichnet, dass** die Abstände (D) jeweils durch eine von unten in die Förderstrecke (K) eingeführte Ablage (6') eingestellt werden.

3. Förderanordnung nach Anspruch 1 oder 2, **dadurch gekennzeichnet, dass** die Ablagen (6) in einem Ablagenmagazin (5, 5') übereinander angeordnet und zur Aufnahme eines Druckproduktes (4) am Einlauf (7) bereitstellbar sind.

4. Förderanordnung nach Anspruch 3, **dadurch gekennzeichnet, dass** das Ablagenmagazin (5, 5') am Anfang der Förderstrecke (K) angeordnet ist.

5. Förderanordnung nach einem der Ansprüche 1 bis 4, **dadurch gekennzeichnet, dass** das Ablagenmagazin (5) durch eine mit dem Ende der Förderstrecke (K) verbundenen Verschiebeinrichtung (28) beschickbar ist.

6. Förderanordnung nach Anspruch 5, **dadurch gekennzeichnet, dass** das Ablagenmagazin (5) von unten beschickbar ist.

7. Förderanordnung nach einem der Ansprüche 1 bis 4, **dadurch gekennzeichnet, dass** das Ablagenmagazin (5') am Ende der Förderstrecke (K) angeordnet ist.

8. Förderanordnung nach Anspruch 7, **dadurch gekennzeichnet, dass** das Ablagenmagazin (5') durch eine Verschiebeeinrichtung (28') mit dem Anfang der Förderstrecke (K) verbunden ist.

9. Förderanordnung nach einem der Ansprüche 7 und 8, **dadurch gekennzeichnet, dass** das Ablagenmagazin (5') von oben beschickbar ist.

10. Förderanordnung nach einem der Ansprüche 1 bis 9, **dadurch gekennzeichnet, dass** die Ablagen (6) jeweils mit einer Hebevorrichtung (34) im Stapel (5, 5') vertikal nach oben transportierbar sind.

11. Förderanordnung nach Anspruch 10, **dadurch gekennzeichnet, dass** das Ablagenmagazin (5, 5') unterhalb des Einlaufs (7) angeordnet ist.

12. Förderanordnung nach einem der Ansprüche 1 bis 11, **dadurch gekennzeichnet, dass** Aufzugmittel (11, 12, 50, 51) vorgesehen sind, die in Abständen der Ablagen (6) gesteuerte Tragelemente (25) aufweisen.

13. Förderanordnung nach Anspruch 12, **dadurch gekennzeichnet, dass** die Tragelemente (25) zwischen einer aktiven und einer Ruhestellung versetzbar sind.

14. Förderanordnung nach Anspruch 13, **dadurch gekennzeichnet, dass** die Tragelemente (25) in der aktiven Stellung jeweils eine Ablage (6) an einem Rand (6a) von unten erfassen.

15. Förderanordnung nach einem der Ansprüche 1 bis 14, **dadurch gekennzeichnet, dass** in einer Förderhöhe (H) der Förderstrecke (K) eine Schiebevorrichtung (15) angeordnet ist, mit der jeweils eine Ablage (6) etwa horizontal vom aufsteigenden Förderstreckenbereich (K1) an den parallel absteigenden Förderstreckenbereich (K3) verschiebbar ist.

16. Förderanordnung nach Anspruch 15, **dadurch gekennzeichnet, dass** die Schiebevorrichtung (15) zur Verkürzung oder Verlängerung der Förderstrecke (K) vertikal verschiebbar ist.

17. Förderanordnung nach einem der Ansprüche 1 bis 16, **dadurch gekennzeichnet, dass** sie zum Kühlen oder Trocknen der Druckprodukte, insbesondere klebegebundener Druckprodukte vorgesehen ist.

18. Förderanordnung nach einem der Ansprüche 1 bis 17, **dadurch gekennzeichnet, dass** sie als Puffer für Druckprodukte vorgesehen ist.

## Claims

1. Conveying arrangement for processing printed products, comprising an infeed area (7) where the printed products (4) are fed to a conveying section (K), a plurality of trays (6) on which the printed products (4) are transported along the conveying section (K) and a delivery area (22) where the printed products (4) are led away from the trays (6) at the end of the conveying section (K), the conveying section (K) having an ascending conveying section area (K1) following the infeed area (7) and a horizontal conveying section area (K2) connecting it to a parallel descending conveying section area (K3) extending at least to the delivery area (22), **characterised in that** the spacings (D) of the trays (6) in the infeed area of the printed products (4) are each controlled in such a manner that they can be adapted to the thickness (d) of the printed product (4).

2. Conveying arrangement according to claim 1, **characterised in that** the spacings (D) are each adjusted by a tray (6') introduced into the conveying section (K) from below.

3. Conveying arrangement according to claim 1 or claim 2, **characterised in that** the trays (6) are arranged one above the other in a tray magazine (5, 5') and can be made available to receive a printed product (4) at the infeed area (7).

4. Conveying arrangement according to claim 3, **characterised in that** the tray magazine (5, 5') is arranged at the beginning of the conveying section (K).

5. Conveying arrangement according to one of claims 1 to 4, **characterised in that** the tray magazine (5) can be loaded by a displacement device (28) connected to the end of the conveying section (K).

6. Conveying arrangement according to claim 5, **characterised in that** the tray magazine (5) can be loaded from below.

7. Conveying arrangement according to one of claims 1 to 4, **characterised in that** the tray magazine (5') is arranged at the end of the conveying section (K).

8. Conveying arrangement according to claim 7, **characterised in that** the tray magazine (5') is connected to the beginning of the conveying section (K) by a displacement device (28').

9. Conveying arrangement according to one of claims 7 and 8, **characterised in that** the tray magazine (5') can be loaded from above.

10. Conveying arrangement according to one of claims 1 to 9, **characterised in that** the trays (6) can each be transported vertically upwards in the stack (5, 5') by a lifting device (34).

11. Conveying arrangement according to claim 10, **characterised in that** the tray magazine (5, 5') is arranged below the infeed area (7).

12. Conveying arrangement according to one of claims 1 to 11, **characterised by** lifting means (11, 12, 50, 51) provided with supporting elements (25) controlled to have the same spacings as the trays (6).

13. Conveying arrangement according to claim 12, **characterised in that** the supporting elements (25) can be displaced between an active position and a rest position.

14. Conveying arrangement according to claim 13, **characterised in that** the supporting elements (25) each grip one edge (6a) of a tray (6) from below in the active position.

15. Conveying arrangement according to one of claims 1 to 14, **characterised in that** a pushing device (15) by means of which a respective tray (6) can be displaced approximately horizontally from the ascending conveying section area (K1) to the parallel descending conveying section area (K3) is arranged at a conveying height (H) of the conveying section (K).

16. Conveying arrangement according to claim 15, **characterised in that** the pushing device (15) is vertically displaceable in order to decrease or increase the length of the conveying section (K).

17. Conveying arrangement according to one of claims 1 to 16, **characterised in that** it is intended for cooling or drying the printed products, in particular adhesive-bound printed products.

18. Conveying arrangement according to one of claims 1 to 17, **characterised in that** it is intended as a buffer for printed products.

## Revendications

1. Système de transport pour le traitement de produits imprimés, comprenant une entrée (7) au niveau de laquelle les produits imprimés (4) alimentent une ligne de transport (K), plusieurs supports (6) sur lesquels les produits imprimés (4) sont transportés le long de la ligne de transport (K) et une réception (22) au niveau de laquelle les produits imprimés sont retirés des supports (6) à la fin de la ligne de transport (K), la ligne de transport (K) présentant une zone de ligne de transport ascendante (K1) faisant suite à l'entrée (7) et une zone de ligne de transport horizontale (K2) reliant cette dernière à une zone de ligne de transport descendante (K3) parallèle s'étendant au moins jusqu'à la réception (22), **caractérisé en ce que** les espaces (D) entre les supports (6) dans la zone d'entrée des produits imprimés (4) sont commandés de manière à pouvoir chaque fois être adaptés à l'épaisseur (d) du produit imprimé (4).

2. Système de transport selon la revendication 1, **caractérisé en ce que** les espaces (D) sont chaque fois réglés par un support (6') introduit par le bas dans la ligne de transport (K).

3. Système de transport selon la revendication 1 ou 2, **caractérisé en ce que** les supports (6) sont superposés dans un magasin de supports (5, 5') et peuvent être mis à disposition au niveau de l'entrée (7) pour recevoir un produit imprimé (4).

4. Système de transport selon la revendication 3, **caractérisé en ce que** le magasin de supports (5, 5') est placé au début de la ligne de transport (K).

5. Système de transport selon l'une des revendications 1 à 4, **caractérisé en ce que** le magasin de supports (5) peut être alimenté par un dispositif de déplacement (28) relié à la fin de la ligne de transport (K).

6. Système de transport selon la revendication 5, **caractérisé en ce que** le magasin de supports (5) peut être alimenté par le bas.

7. Système de transport selon l'une des revendications 1 à 4, **caractérisé en ce que** le magasin de supports (5') est placé à la fin de la ligne de transport (K).

8. Système de transport selon la revendication 7, **caractérisé en ce que** le magasin de supports (5') est relié au début de la ligne de transport (K) par un dispositif de déplacement (28').

9. Système de transport selon la revendication 7 ou 8, **caractérisé en ce que** le magasin de supports (5') peut être alimenté par le haut.

10. Système de transport selon l'une des revendications 1 à 9, **caractérisé en ce que** les supports (6) peuvent être transportés verticalement vers le haut à l'intérieur de la pile (5, 5') par un dispositif élévateur (34).

11. Système de transport selon la revendication 10, **caractérisé en ce que** le magasin de supports (5, 5') est placé au-dessous de l'entrée (7).

12. Système de transport selon l'une des revendications 1 à 11, **caractérisé en ce que** des moyens de levage (11, 12, 50, 51) sont prévus, qui présentent dans les espaces entre les supports (6) des éléments porteurs (25) commandés.

13. Système de transport selon la revendication 12, **caractérisé en ce que** les éléments porteurs (25) peuvent être déplacés entre une position active et une position de repos.

14. Système de transport selon la revendication 13, **caractérisé en ce que** les éléments porteurs (25) en position active soutiennent chacun un support (6) par un bord (6a).

15. Système de transport selon l'une des revendications 1 à 14, **caractérisé en ce qu'**à un niveau de la hauteur de transport (H) de la ligne de transport (K) est disposé un dispositif de poussée (15) permettant chaque fois de faire passer un support (6) approximativement horizontalement de la zone ascendante de la ligne de transport (K1) à la zone descendante de la ligne de transport (K2) parallèle à la précédente.

16. Système de transport selon la revendication 15, **caractérisé en ce que** le dispositif de poussée (15) est déplaçable verticalement pour raccourcir ou rallonger la ligne de transport (K).

17. Système de transport selon l'une des revendications 1 à 16, **caractérisé en ce qu'**il est prévu pour laisser refroidir ou sécher les produits imprimés (4), notamment des produits imprimés brochés.

18. Système de transport selon l'une des revendications 1 à 17, **caractérisé en ce qu'**il est prévu en tant que dispositif de stockage intermédiaire pour des produits imprimés.
